# EUROPEAN PATENT SPECIFICATION

(11) **EP 3 672 457 B1**
(45) Date of publication and mention of the grant of the patent: **01.05.2024**
(21) Application number: 18773679.8
(22) Date of filing: 21.08.2018
(51) Int. Cl.: A47J 37/04, A47J 37/06

(54) **AUTOMATED GRILL WITH CONVEYOR AND ACTIVE COMPRESSION**
AUTOMATISIERTER GRILL MIT FÖRDERER UND AKTIVER KOMPRESSION
GRILL AUTOMATISÉ COMPRENANT UN TRANSPORTEUR ET UNE COMPRESSION ACTIVE

(30) Priority: 22.08.2017 US 201762548654 P
(43) Date of publication of application: 01.07.2020
(73) Proprietor: Taylor Commercial Foodservice, LLC, Rockton, IL 61072 (US)
(72) Inventor: MINARD, James, J., Rockton, IL 61072 (US); NELSON, Dennis, J., Rockton, IL 61072 (US); SANDS, Jeffrey, L., Rockton, IL 61072 (US)
(74) Representative: Leach, Sean Adam
(86) International application number: PCT/US2018/047231
(87) International publication number: WO 2019/040439

(56) References cited:
- WO-A1-03/092407
- US-A- 3 646 879
- US-A- 5 006 358
- US-A- 5 458 051
- US-A1- 2006 257 542
- US-A1- 2014 216 272
- US-A1- 2017 099 986

## Description

### RELATED APPLICATION

The present patent document claims the benefit of the filing date under 35 U.S.C. §119(e) of Provisional U.S. Patent Application Serial No. 62/548,654, filed August 22, 2017.

### BACKGROUND

The subject matter disclosed herein generally relates to automated grills, and more particularly, to a system and method of automation of cooking food product.

Cooking meat, vegan, vegetarian, and/or seafood is often labor intensive and requires a person to form, transfer, handle and/or interact with the food product and monitor the food product throughout the cooking process. Variations in cooking expertise and style may often lead to differences in uniformity of the final product (i.e. the cooked food product). Improvements are desired to both reduce the labor required to cook food product while simultaneously increasing the quality and uniformity of the final product.

US2017099986 describes a grilling appliance for preparing various different types of food wherein the food is conveyed through the appliance, from a food insert end of the appliance to a food removal end of the appliance, by means of continuously movable flow-through upper and lower cooperating conveyors operatively associated with platen-type heating members over which the upper and lower conveyors are conveyed so as to be heated by the platen-type heating members and thereby, in turn, heat, brown, or carmelize the food as desired or required.

US2014216272 describes a food cooking apparatus comprising: a bottom continuous belt generally adjacent to the extruder, the bottom continuous belt comprising a plurality of bottom channels on the outer surface of the belt; a top continuous belt, that meshes with the bottom continuous belt along a belt mesh length, the top continuous belt comprising a plurality of top channels on the outer surface of the belt such that at the belt mesh length, each pair of adjacent top and bottom channels form a cooking volume, where the cooking volume has a cooking surface that is configured to generally completely abut the outer surface of a food located in the cooking volume; and where the food cooking apparatus is configured to rotate the top continuous belt and the food remains in the cooking volume for such time that the food is suitably cooked when it leaves the bottom continuous belt.

US5458051describes a belt grill for continuously cooking fast food products on a conveyor formed of counter-rotating heat conductive belts. The belts are heated by platens disposed above and below whereby a run of the belts passes in heat conductive relationship between the platens, and the food to be cooked is placed in the nip between the rotating belts.

US2006257542 describes a flexible automatic broiler and method of use for variable batch cooking for particular use in quick serve and fast food service restaurants. The automatic cooking devices include a conveyorized cooking surface for alignment and discharge of food products, an altering/pulsating infrared energy radiation heat sources, and a control system.

### BRIEF SUMMARY

According to one embodiment, a grill is provided. The grill comprising: an upper platen assembly including an upper grilling plate; a lower platen assembly including a lower grilling plate opposite the upper grilling plate, the upper grilling plate being separated from the lower grilling plate by a distance; one or more actuators operably connected to at least one of the upper platen assembly and the lower platen assembly, wherein the one or more actuators are configured to adjust the distance; and a conveyor belt located between the upper grilling plate and the lower grilling plate, wherein the conveyer belt is configured to move one or more food products between the upper grilling plate and the lower grilling plate.

In addition to one or more of the features described above, or as an alternative, further embodiments may include that at least one of the upper platen assembly and the lower platen assembly moves between a cooking position and a non-cooking position to adjust the distance.

In addition to one or more of the features described above, or as an alternative, further embodiments may include that at least one of the upper grilling plate and the lower grilling plate moves between a cooking position and a non-cooking position to adjust the distance.

In addition to one or more of the features described above, or as an alternative, further embodiments may include: a food product former configured to form each of the one or more food products and place each of the one or more food products on the conveyor belt.

In addition to one or more of the features described above, or as an alternative, further embodiments may include that the conveyer belt is configured to move the one or more food products between the upper grilling plate and the lower grilling plate when at least one of the upper platen assembly and the lower platen assembly is in the non-cooking position.

In addition to one or more of the features described above, or as an alternative, further embodiments may include that at least one of the upper platen assembly and the lower platen assembly is configured to move from the non-cooking position to the cooking position when the one or more food products is located in between the upper grilling plate and the lower grilling plate.

In addition to one or more of the features described above, or as an alternative, further embodiments may include that at least one of the upper platen assembly and the lower platen assembly is configured to remain in the cooking position for a selected period of time.

In addition to one or more of the features described above, or as an alternative, further embodiments may include that the one or more actuators are configured to adjust the distance during the selected period of time.

In addition to one or more of the features described above, or as an alternative, further embodiments may include that at least one of the upper platen assembly and the lower platen assembly is configured to move from cooking position to the non-cooking position after the selected period of time.

In addition to one or more of the features described above, or as an alternative, further embodiments may include that the conveyor belt is configured to move the one or more food products from the conveyor belt to a storage receptacle.

In addition to one or more of the features described above, or as an alternative, further embodiments may include: a food stripper configured to separate each of the one or more food products from the conveyor belt.

In addition to one or more of the features described above, or as an alternative, further embodiments may include that the food stripper diverts each of the one or more food products into a storage receptacle.

In addition to one or more of the features described above, or as an alternative, further embodiments may include: a belt cleaner configured to clean the conveyor belt.

According to another embodiment, a method of cooking food product is provided. The method comprising: transporting, using a conveyor belt, a one or more food products between an upper grilling plate and a lower grilling plate; moving, using one or more actuators, at least one of the upper grilling plate and the lower grilling plate from a non-cooking position to a cooking position when the one or more food products are between the upper grilling plate and the lower grilling plate; heating, using the upper grilling plate, the one or more food products when at least one of the upper grilling plate and the lower grilling plate is in the cooking position; heating, using the lower grilling plate, the one or more food products when at least one of the upper grilling plate and the lower grilling plate is in the cooking position; and moving, using one or more actuators, at least one of the upper grilling plate and the lower grilling plate from the cooking position to the non-cooking position after a selected period of time.

In addition to one or more of the features described above, or as an alternative, further embodiments may include: stopping the conveyor belt when the one or more food products is between the upper grilling plate and the lower grilling plate; cooking the one or more food products for a selected period of time; and transporting, using the conveyor belt, the one or more food products out from between the upper grilling plate and the lower grilling plate after at least one of the upper grilling plate and the lower grilling plate moves from the cooking position to the non-cooking position.

In addition to one or more of the features described above, or as an alternative, further embodiments may include: adjusting, using the one more or actuators, a distance between the upper grilling plate and the lower grilling plate when at least one of the upper grilling plate and the lower grilling plate is in the cooking position.

In addition to one or more of the features described above, or as an alternative, further embodiments may include: forming, using a food product former, each of the one or more food products; and placing, using the food product former, each of the one or more food products onto the conveyor belt.

In addition to one or more of the features described above, or as an alternative, further embodiments may include: transferring each of the one or more food products from the conveyor belt to a storage receptacle.

In addition to one or more of the features described above, or as an alternative, further embodiments may include: separating, using a food stripper, each of the one or more food products from the conveyor belt.

In addition to one or more of the features described above, or as an alternative, further embodiments may include: diverting, using the food stripper, each of the one or more food products into a storage receptacle.

Technical effects of embodiments of the present disclosure include a system configured to form and cook the food product automatically using a conveyor system.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 schematically illustrates a perspective view of a grill, in accordance with an embodiment of the disclosure;
FIG. 2a schematically illustrates a cross-sectional view of a grill, in accordance with an embodiment of the disclosure;
FIG. 2b schematically illustrates a cross-sectional view of a grill, in accordance with an embodiment of the disclosure; and
FIG. 3 illustrates a flow diagram illustrating a method of grilling food products, according to an embodiment of the present disclosure.

### DETAILED DESCRIPTION

A detailed description of one or more embodiments of the disclosed apparatus and method are presented herein by way of exemplification and not limitation with reference to the Figures.

Referring now to the FIGS., a grill 20 is illustrated including a lower platen assembly 24 and an upper platen assembly 26 operably connected to a rigid base structure 22. The rigid base structure 22 may be composed of an upper mounting structure 22a supporting the upper platen assembly 26 and a lower mounting structure 22b supporting the lower platen assembly 24.

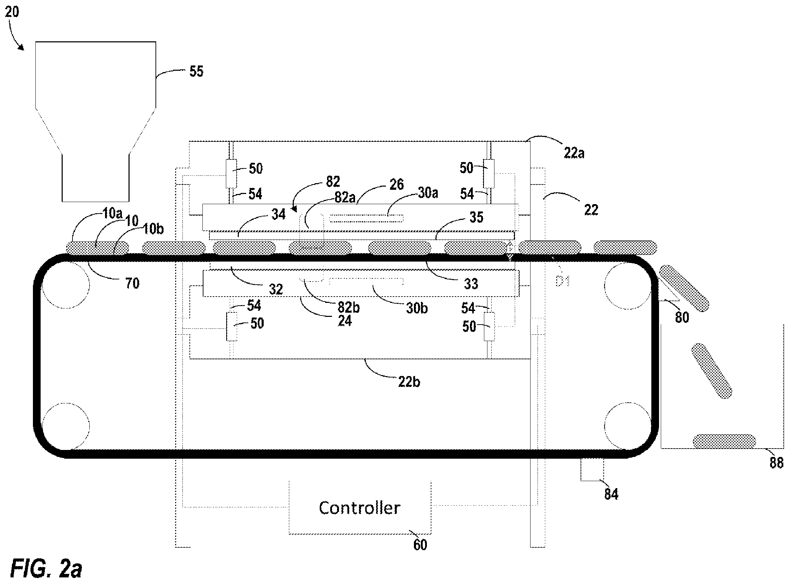

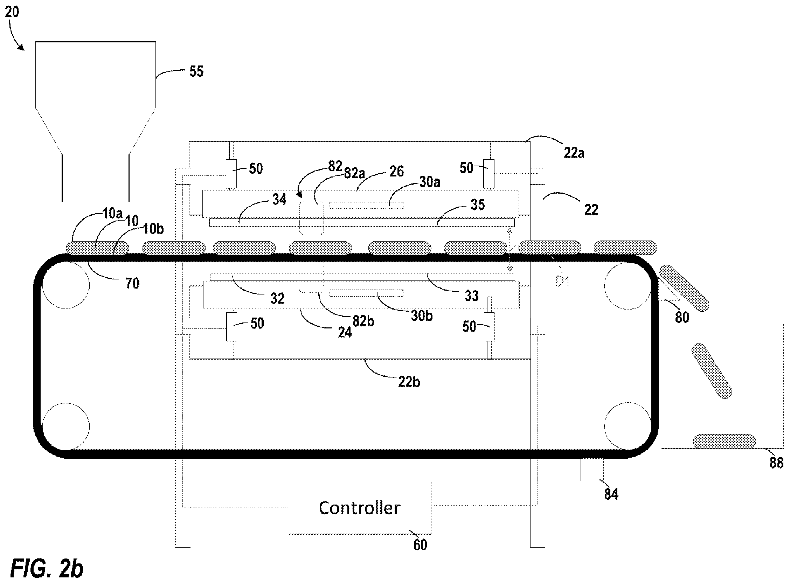

At least one of the upper platen assembly 26 and the lower platen assembly 24 may move from a cooking position seen in FIG. 2a to a non-cooking position seen in FIG. 2b. The cooking position is a position where the upper platen assembly 26 and the lower platen assembly 24 may transfer heat through grilling plates 34, 32 to food products 10. Heat may be transferred from the grilling plates 32, 34 to the food products 10 when the grilling plates 32, 34 are physically touching the food products 10. In some embodiments, the cooking position may include multiple positions where the heat may be transferred from the grilling plates 32, 34 to the food product 10 in order to cook the food product 10. For example, at a distance D1 the grilling plates 32, 34 may just be touching the food product 10 in a cooking position; however if the distance D1 is decreased the grilling plates 32, 34 may apply increased pressure to the food product 10 while remaining in a cooking position. In a non-limiting embodiment, both the upper platen assembly 26 and the lower platen assembly 24 move from the cooking position seen in FIG. 2a to the non-cooking position seen in FIG. 2b. In another non-limiting embodiment, either one of the upper platen assembly 26 or the lower platen assembly 24 may be fixed while the other moves. In yet another non-limiting embodiment, the upper platen assembly 26 may be fixed and the lower platen assembly 24 may move from the cooking position seen in FIG. 2a to the non-cooking position seen in FIG. 2b. Alternatively, in another non-limiting embodiment, the lower platen assembly 24 may be fixed and the upper platen assembly 26 may move from the cooking position seen in FIG. 2a to the non-cooking position seen in FIG. 2b.

The upper platen assembly 26 may be movably attached to the upper mounting structure 22a with one or more actuators 50 such that the upper platen assembly 26 is configured to move between the cooking position (FIG. 2a) and the non-cooking position (FIG. 2b). The upper platen assembly 26 may be vertically lowered and raised in a generally linear motion. Alternatively, the upper platen assembly 26 may be operably connected to the upper structure 22a by a hinged connection (not shown) such that the upper platen assembly 26 is configured to pivot relative to the conveyor belt 70. The actuators 50 may be hinged connected. The upper platen assembly 26 may be moved between the cooking position (FIG. 2a) and the non-cooking position (FIG. 2b) either automatically or manually. The upper platen assembly 26 may include a handle 30a that can be grabbed by an operator to move the upper platen assembly 26 between the cooking position (FIG. 2a) and the non-cooking position (FIG. 2b).

The lower platen assembly 24 is movably attached to the lower mounting structure 22b with one or more actuators 50 such that the upper platen assembly 26 is configured to move between the cooking position (FIG. 2a) and the non-cooking position (FIG. 2b). The lower platen assembly 24 can be vertically lowered and raised, preferably in a generally linear motion. Alternatively, the lower platen assembly 24 may be operably connected to the lower structure 22b by a hinged connection (not shown) such that the lower platen assembly 24 is configured to pivot relative to the conveyor belt 70. The actuators 50 may be hinged connected. The lower platen assembly 24 may be moved between the cooking position (FIG. 2a) and the non-cooking position (FIG. 2b) either automatically or manually. The lower platen assembly 24 may include a handle 30b that can be grabbed by an operator to move the lower platen assembly 24 between the cooking position (FIG. 2a) and the non-cooking position (FIG. 2b).

The handles 30a, 30b may include a latch mechanism 82 configured to produce active compression on the food products 10 being cooked. The latch mechanism 82 may also not be included in the handles 30a, 30b and it may be included elsewhere on the grill 20 to provide the locking feature to support active compression. The latch mechanism 82 is discussed further below.

The lower platen assembly 24 includes a lower grilling plate 32 and the upper platen assembly 26 includes an upper grilling plate 34. A food product former 55 may be configured to form the food product 10 into patties in a non-limiting example and place each food product 10 on the conveyer belt 70. The conveyer belt 70 is configured to move a one or more food products between the lower grilling plate 32 and the upper grilling plate 34 when the at least one of the upper platen assembly 26 and the lower platen assembly 24 is in the non-cooking position (FIG. 2b). In FIGs. 2a and 2b, four food products 10 are cooked at one time. It is understood that the grilling plates 34, 32 may vary in size and thus the number of food products 10 may also change. At least one of the upper platen assembly 26 and the lower platen assembly 24 is moved from the non-cooking position (FIG. 2b) to the cooking position (FIG. 2a) when the one or more food products 10 are in between the lower grilling plate 32 and the upper grilling plate 34. When in the cooking position (FIG. 2a), the one or more food products 10 are exposed to a grilling surface 35 of the upper grilling plate 32. A heating surface 33 of the lower grilling plate 32 transfers heat to the one or more food products 10 through the conveyor belt 70. The conveyor belt may be composed of a thermally conductive material such as, for example, steel, relief sheet metal, Teflon, thin stainless steel, or similar conductive and flexible material.

The grilling surface 35 of the upper grilling plate 34 and the heating surface 33 of the lower grilling plate 32 may be separated by a distance D1. Heat is applied to the one or more food products 10 for a selected period of time in order to cook each of the food products 10 to a selected degree of doneness (i.e. rare, medium- rare, medium, medium-well, well-done). The distance D1 may be adjusted automatically or manually during the selected period of time while cooking the food products 10 and also when cooking of the food products 10 is completed. The distance D1 may be adjusted automatically by the actuators 50 through a controller 60 or manually by an operator via the handles 30a, 30b. Advantageously, by adjusting the distance D1, the pressure applied to the one or more food products 10 may be adjusted to control desired cooking techniques. For example, increased pressure (i.e. decreased distance D1) or active compression may be utilized to apply a sear to each of the one or more food products 10 at the beginning of the selected period of time, then the pressure may be decreased (i.e. increased distance D1) for normal cooking during a remaining portion of the selected period of time. Advantageously, active compression may be used to apply pressure at various intervals at any time during the cooking cycle. The frequency, compression amount, and duration may all be programmable through the controller 60 and dependent on the desired product characteristic outputs required (e.g. degree of doneness).

The lower grilling plate 32 is configured to provide heat to the lower side 10b of each of the one or more food products 10 located on the conveyer belt 70 and the upper grilling plate 34 is configured to provide heat to an upper side 10a of each of the one or more food products 10 located on the conveyor belt 70. The upper and lower grilling plates 32, 34 are heated by a heater (not shown) to cook the one or more food products 10. In order to transmit heat to the food items cooked by the grill, the lower and upper grilling plates 32, 34, respectively, may be formed of a heat- conducting material, such as cast aluminum, abrasion-resistant steel, cast iron, stainless steel, mild steel, a ceramic material, or other suitable heat conducting materials used in grills. Although the lower and upper grilling plates 32, 34 are shown as having a rectangular shape, one or both of the grilling plates 32, 34 may also be formed into other shapes, such as circular or oval shapes for example.

The actuators 50 may also be used to control the tilt, angle, and/or attitude of the grilling plates 32, 34. Although four actuators 50 are illustrated in the FIGS., embodiments having any number of actuators 50 are within the scope of the invention. For example, one or more actuators 50 may be used. FIGs. 2a and 2b show that the actuators 50 connect the upper platen assembly 26 to the upper mounting structure 22a and the lower platen assembly 24 to the lower mounting structure 22b; however a person of ordinary skill in the art may understand that various of types of actuator connections would allow relative movement of grilling plates 32, 34 and the disclosure is not limited to the actuator connection shown in FIGs. 2a and 2b. For instance, the actuators 50 may connect the upper platen assembly 26 to the upper grilling plate 34 and the lower platen assembly 24 to the lower grilling plate 32.

The grill 20 include a controller 60 configured to control the operation of the grill 20. The controller 60 may be in electronic communication with the actuators 50, the upper platen assembly 26, the lower platen assembly 24, the upper grilling plate 34, the lower grilling plate 32, the conveyor belt 70, the belt cleaner 85, and the food product former 55. The controller 60 may include a processor and memory. For ease of illustration, the processor and memory are not shown in FIGs. 2a and 2b. The processor can be any type or combination of computer processors, such as a microprocessor, microcontroller, digital signal processor, application specific integrated circuit, programmable logic device, and/or field programmable gate array. The memory can be a non-transitory computer readable storage medium tangibly embodied in or operably connected to the path determination system including executable instructions stored therein, for instance, as firmware. The controller 60 is configured to operate the actuators 50, the upper platen assembly 26, the lower platen assembly 24, the upper grilling plate 34, the lower grilling plate 32, the conveyor belt 70, the belt cleaner 85, and the food product former 55.

Each actuator 50 may be operated independently by the controller 60 and as a result, the grilling plates 32, 34 may be arranged in a non-horizontal configuration. Advantageously, arranging the plates in a non-horizontal configuration would allow for enhanced control of grease migration (flow of cooked grease from cooking food products 10). Also, if a steam ring is utilized by the grill 20 for cooking, it may be advantageous to raise the upper platen assembly 26 at an angle to direct the cooking steam in a specific direction say away from the operator of the grill 20. In one embodiment, the actuators 50 are linear actuators, such as hydraulic, pneumatic, or mechanical actuators for example. One or more sensors (not shown) are configured to monitor each of the plurality of actuators 50 and detect the distance D1 between lower grilling plate 32 and the upper grilling plate 34. In one embodiment, the sensors are Hall Effect sensors or encoders configured to monitor the position of a movable portion 54 of the actuators 50. Alternatively, other types of sensors, such as sensors configured to monitor current, load, resistance, or another characteristic of the plurality of actuators 50 for example, is also within the scope of the disclosure. In another embodiment, the motor resistance of each actuator 50 may be used to monitor the position of each actuator 50. For example, increased motor resistance increases the compression of the grilling plates 32, 34 and once a maximum resistance is reached, a maximum compression is reached and thus the grilling plates may be in direct contact at the maximum resistance of the motor of each actuator 50. This may be used during the calibration of the upper platen assembly 26 to ensure it is parallel to the lower platen assembly 24. Through the distance D1 may be adjusted to accommodate the variation of thickness of the food products 10 to be cooked on the grill 20. Further, each actuator 50 may apply a positive pressure on the grilling plates 32, 34 and consequently on the food products 10 as they are being cooked on the grill 20, resulting in compression of the food products 10.

The grill 20 may be automatically calibrated to ensure that the distance D1 between the lower grilling plate 32 and the upper grilling plate 34 is maintained at a desired size. By calibrated, it is meant that the upper grilling plate 34 and the lower grilling plate 32 are level to one another to ensure proper cooking of food items. In one example, the grill 20 is calibrated daily to correct any unleveling of the lower grilling plate 32 that may have occurred during the previous day. The calibration of the grill may be done automatically by the grill 20 utilizing the actuators 50 without the need for external tools, gages, or operators.

Once cooking of each of the one or more food products 10 is completed, the upper platen assembly 26 and lower platen assembly 24 may be moved to the non-cooking position (FIG. 2b) and then the convey belt 70 may move each food product 10 to a storage receptacle 88 for storage. A food stripper 80 may be used to help separate each food product 10 from the conveyor belt 70. The food stripper 80 may be a wedge that pries the food product 10 from the conveyor belt 70 as the conveyor belt 70 moves the food product 10 into the food stripper 80. The food stripper 80 may be made from a bent, cast, molded, and/or welded piece of sheet metal, such as stainless steel for example. Once the food product 10 has been removed from the conveyor belt 70, the conveyor belt 70 passed through and/or past a belt cleaner 84 configured to clean the conveyor belt 70. The belt cleaner 84 may include an abrasive material and/or scrapper (not shown) to remove grease and food particles remaining from the cooking process of the food products 10. The belt cleaner 84 may also clean the conveyer belt 70 using a cleaning solution and/or steam. Additionally, the belt cleaner 84 may include high pressure nozzles, moveable brushes, heat, and/or other methods known to one of skill in the art to remove residual food products from the cooking process.

The grill 20 may also include a latch mechanism 82 configured to secured the upper platen assembly 26 and the lower platen assembly 24 in the cooking position (FIG. 2a). The latch mechanism 82 may be composed of an upper latch mechanism 82a connected to the upper platen assembly 26 and a lower latch mechanism 82b connected to the lower platen assembly 24. The upper latch mechanism 82a is configured to interlock with and/or secure to the lower latch mechanism 82b. The latch mechanism 82 may include a locking mechanism, such as, for example a magnet, a lock, a slide lock, a turn lock, ball detent lock, or any other locking mechanism known to one of skill in the art. Although the latch mechanism 82 is illustrated near handles 30a, 30b the latch mechanism 82 may be in other locations and more than one latch mechanism may be incorporated into the grill 20. The latch mechanism 82 may be adjustable either manually or automatically, such as by a button (not shown) that moves or deactivates the latch mechanism 82. In one embodiment, the latch mechanism 82 is configured to automatically unlock such that the upper platen assembly 26 is released from the lower platen assembly 24 in the event of power loss.

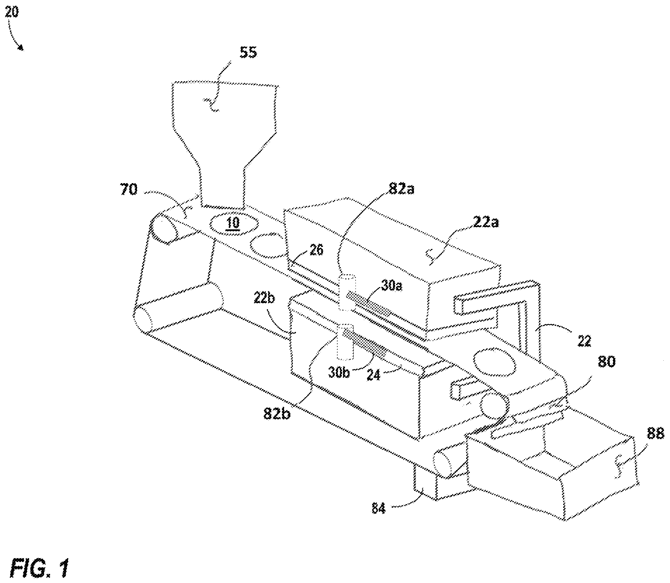

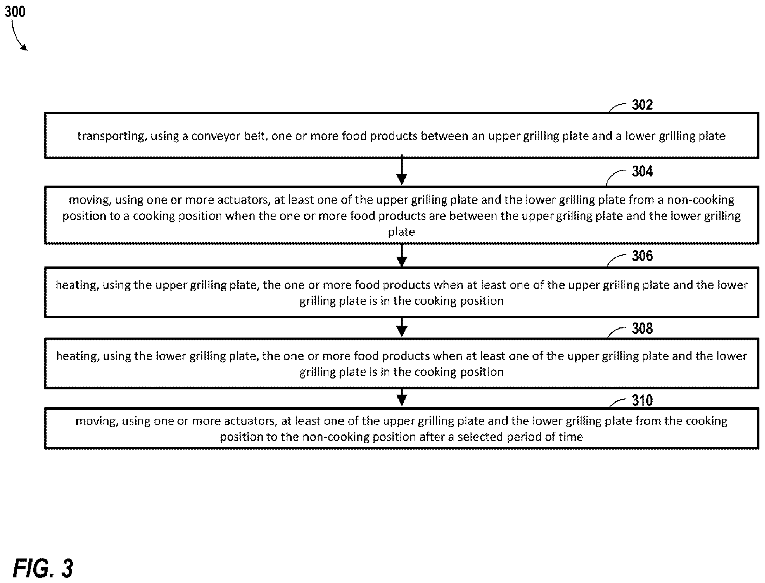

Referring now to FIG. 3, with continued reference to FIGs. 1, 2a, and 2b, FIG. 3 shows a flow chart of method 300 of cooking food products, in accordance with an embodiment of the present disclosure. At block 302, a conveyor belt 70 transports a one or more food products 10 in between an upper grilling plate 34 and a lower grilling plate 32. The conveyor belt is located in between the upper grilling plate 34 and the lower grilling plate 32, as seen in FIGs. 1, 2a, and 2b. The method 300 may further include that a food product former 55 forms each of the one or more food products 10 and places each of the one or more food products 10 on the conveyor belt 70.

At block 304, one or more actuators 50 move at least one of the upper grilling plate 34 and the lower grilling plate 32 from a non-cooking position (FIG. 2b) to a cooking position (FIG. 2a) when the one or more food products 10 are between the upper grilling plate 34 and the lower grilling plate 32. As mentioned above, the one or more actuators 50 are operably connected to at least one of the upper platen assembly 26 and the lower platen assembly 24. The upper platen assembly 26 includes the upper grilling plate 34 and the lower platen assembly 24 includes the lower grilling plate 32. Alternatively, the one or more actuators 50 may be operably connected directly to at least one of the upper grilling plate 34 and the lower grilling plate 32. The upper grilling plate 34 and the lower grilling plate 32 are separated by a distance D1.

At block 306, the upper grilling plate 34 heats the one or more food products 10 when at least one of the upper grilling plate 34 and the lower grilling plate 32 is in the cooking position (FIG. 2a). At block 308, the lower grilling plate 32 heats the one or more food products when at least one of the upper grilling plate and the lower grilling plate 32 is in the cooking position (FIG. 2a). The one or more actuators 50 may adjust the distance D1 during the selected period of time. Advantageously, adjusting the distance D1 adjusts the pressure placed on each of the selected food products 10 by the grilling plates 32, 34. At block 310, one or more actuators 50 moves at least one of the upper grilling plate 34 and the lower grilling plate 32 from the cooking position (FIG. 2a) to the non-cooking position (FIG. 2b) after a selected period of time. The selected period of time may vary depending upon the degree of doneness desired, such as, for example, rare, medium-rare, medium, medium-well, and well-done. It is important to note that the degree of doneness may be judged by specific temperatures (e.g. 140°F, 160°F, 180°F...etc.) assigned to the subjective terms of rare, medium-rare, medium, medium-well, and well-done. The method 300 may further include that the conveyor belt 70 transfers each of the one or more food products 10 from the conveyor belt 70 to a storage receptacle 88. A food stripper 80 may be used to help separate each of the one or more food products 10 from the conveyor belt 70. The food stripper 80 may also divert each of the one or more food products 10 into a storage receptacle 88. The method 300 may further include, cleaning the conveyor belt 70 using a belt cleaner 84, as described above.

While the above description has described the flow process of FIG. 3 in a particular order, it should be appreciated that unless otherwise specifically required in the attached claims that the ordering of the steps may be varied.

As described above, embodiments can be in the form of processor- implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the appended claims. In addition, many modifications may be made to adapt a particular situation or material to the teachings of the present disclosure without departing from the scope as defined by the appended claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A grill comprising:
an upper platen assembly (26) including an upper grilling plate (34);
a lower platen assembly (24) including a lower grilling plate (32) opposite the upper grilling plate (34), the upper grilling plate (34) being separated from the lower grilling plate (32) by a distance;
a first one or more actuators (50) operably connected to the upper platen assembly (26) and a second one or more actuators operably connected to the lower platen assembly (24), wherein the first and second one or more actuators (50) are configured to adjust the distance; and
a conveyor belt (70) located between the upper grilling plate (34) and the lower grilling plate (32), wherein the conveyer belt (70) is configured to move one or more food products between the upper grilling plate (34) and the lower grilling plate (32),
wherein the movement of the upper platen assembly (26) and the lower platen assembly (24) to adjust the distance causes the upper platen assembly (26) and the lower platen assembly (24)to move with respect to the conveyor belt (70) between the upper grilling plate (34) and the lower grilling plate (32),
wherein each of the upper grilling plate (34) and the lower grilling plate (32) moves between a cooking position and a non-cooking position to adjust the distance, wherein the lower platen assembly is configured to be lowered and raised to move between the cooking position and non-cooking position and wherein in the non-cooking position the lower grilling plate is spaced from the conveyor belt.

2. The grill of claim 1, further comprising: a food product former (55) configured to form each of the one or more food products and place each of the one or more food products on the conveyor belt (70).

3. The grill of claim 1, wherein the conveyer belt is configured to move the one or more food products between the upper grilling plate (34) and the lower grilling plate (32) when at least one of the upper platen assembly (26) and the lower platen assembly (24) is in the non-cooking position.

4. The grill of claim 3, wherein at least one of the upper platen assembly (26) and the lower platen assembly (24) is configured to move from the non-cooking position to the cooking position when the one or more food products is located in between the upper grilling plate (34) and the lower grilling plate (32).

5. The grill of claim 1, wherein at least one of the upper platen assembly (26) and the lower platen assembly (24) is configured to remain in the cooking position for a selected period of time, for example wherein the one or more actuators are configured to adjust the distance during the selected period of time, for example, wherein at least one of the upper platen assembly (26) and the lower platen assembly (24) is configured to move from cooking position to the non-cooking position after the selected period of time.

6. The grill of claim 1, wherein the conveyor belt (70) is configured to move the one or more food products from the conveyor belt (70) to a storage receptacle (88).

7. The grill of claim 1, further comprising: a food stripper configured to separate each of the one or more food products from the conveyor belt (70) , for example wherein the food stripper diverts each of the one or more food products into a storage receptacle (88), for example wherein the grill further comprises: a belt cleaner (84) configured to clean the conveyor belt (70).

8. The grill of any preceding claim wherein moving with respect to the conveyor belt (70) comprises one of the upper platen assembly (26) and the lower platen assembly (24) pivoting relative to the conveyor belt, for example wherein the one of the upper platen assembly (26) and the lower platen assembly (24) is operably connected by a hinged connection to provide said pivoting relative to the conveyor belt (70).

9. A method of cooking food product using the grill of claim 1:
transporting, using the conveyor belt (70), a one or more food products between the upper grilling plate (34) and the lower grilling plate (32);
moving, using the one or more actuators (50), at least one of the upper grilling plate (34) and the lower grilling plate (32) from the non-cooking position to the cooking position when the one or more food products are between the upper grilling plate (34) and the lower grilling plate (32);
heating, using the upper grilling plate (34), the one or more food products when at least one of the upper grilling plate (34) and the lower grilling plate (32) is in the cooking position;
heating, using the lower grilling plate (32), the one or more food products when at least one of the upper grilling plate (34) and the lower grilling plate (32) is in the cooking position; and
moving, using the one or more actuators (50), at least one of the upper grilling plate (34) and the lower grilling plate (32) from the cooking position to the non-cooking position after a selected period of time.

10. The method of claim 9, further comprising: stopping the conveyor belt (70) when the one or more food products is between the upper grilling plate (34) and the lower grilling plate (32); cooking the one or more food products for a selected period of time; and transporting, using the conveyor belt (70), the one or more food products out from between the upper grilling plate (34) and the lower grilling plate (32) after at least one of the upper grilling plate (34) and the lower grilling plate (32) moves from the cooking position to the non-cooking position.

11. The method of claim 9, further comprising: adjusting, using the one or more actuators (50), a distance between the upper grilling plate (34) and the lower grilling plate (32) when at least one of the upper grilling plate (34) and the lower grilling plate (32) is in the cooking position.

12. The method of claim 9, further comprising: forming, using a food product former (55), each of the one or more food products; and placing, using the food product former (55), each of the one or more food products onto the conveyor belt (70).

13. The method of claim 9, further comprising: transferring each of the one or more food products from the conveyor belt (70) to a storage receptacle (88).

14. The method of claim 9, further comprising: separating, using a food stripper, each of the one or more food products from the conveyor belt (70).

15. The method of claim 9, further comprising: diverting, using the food stripper, each of the one or more food products into a storage receptacle (88).

## Patentansprüche

1. Ein Grillgerät, das Folgendes umfasst:
eine obere Plattenanordnung (26), die eine obere Grillplatte (34) beinhaltet;
eine untere Plattenanordnung (24), die eine der oberen Grillplatte (34) entgegengesetzte untere Grillplatte (32) beinhaltet, wobei die obere Grillplatte (34) von der unteren Grillplatte (32) um einen Abstand getrennt ist;
einen ersten oder mehrere Aktoren (50), die mit der oberen Plattenanordnung (26) betriebsmäßig verbunden sind, und einen zweiten oder mehrere Aktoren, die mit der unteren Plattenanordnung (24) betriebsmäßig verbunden sind, wobei der erste und zweite oder die mehreren Aktoren (50) dazu konfiguriert sind, den Abstand zu verstellen; und
ein Förderband (70), das sich zwischen der oberen Grillplatte (34) und der unteren Grillplatte (32) befindet, wobei das Förderband (70) dazu konfiguriert ist, ein oder mehrere Lebensmittelprodukte zwischen der oberen Grillplatte (34) und der unteren Grillplatte (32) zu bewegen,
wobei die Bewegung der oberen Plattenanordnung (26) und der unteren Plattenanordnung (24), um den Abstand zu verstellen, die obere Plattenanordnung (26) und die untere Plattenanordnung (24) veranlassen, sich in Bezug auf das Förderband (70) zwischen der oberen Grillplatte (34) und der unteren Grillplatte (32) zu bewegen,
wobei sich jede der oberen Grillplatte (34) und der unteren Grillplatte (32) zwischen einer Garposition und einer Nicht-Garposition bewegt, um den Abstand zu verstellen, wobei die untere Plattenanordnung dazu konfiguriert ist, gesenkt und gehoben zu werden, um sich zwischen der Garposition und Nicht-Garposition zu bewegen, und wobei die Nicht-Garposition der unteren Grillplatte von dem Förderband beabstandet ist.

2. Grillgerät nach Anspruch 1, das ferner Folgendes umfasst: einen Lebensmittelproduktformer (55), der dazu konfiguriert ist, jedes des einen oder der mehreren Lebensmittelprodukte zu formen und jedes des einen oder der mehreren Lebensmittelprodukte auf dem Förderband (70) zu platzieren.

3. Grillgerät nach Anspruch 1, wobei das Förderband dazu konfiguriert ist, das eine oder die mehreren Lebensmittelprodukte zwischen der oberen Grillplatte (34) und der unteren Grillplatte (32) zu bewegen, wenn mindestens eine der oberen Plattenanordnung (26) und der unteren Plattenanordnung (24) in der Nicht-Garposition ist.

4. Grillgerät nach Anspruch 3, wobei mindestens eine der oberen Plattenanordnung (26) und der unteren Plattenanordnung (24) dazu konfiguriert ist, sich von der Nicht-Garposition zu der Garposition zu bewegen, wenn sich das eine oder die mehreren Lebensmittelprodukte zwischen der oberen Grillplatte (34) und der unteren Grillplatte (32) befinden.

5. Grillgerät nach Anspruch 1, wobei mindestens eine der oberen Plattenanordnung (26) und der unteren Plattenanordnung (24) dazu konfiguriert ist, für eine ausgewählte Zeitdauer in der Garposition zu bleiben, wobei zum Beispiel der eine oder die mehreren Aktoren dazu konfiguriert sind, den Abstand während der ausgewählten Zeitdauer zu verstellen, wobei zum Beispiel mindestens eine der oberen Plattenanordnung (26) und der unteren Plattenanordnung (24) dazu konfiguriert ist, sich nach der ausgewählten Zeitdauer von der Garposition zu der Nicht-Garposition zu bewegen.

6. Grillgerät nach Anspruch 1, wobei das Förderband (70) dazu konfiguriert ist, das eine oder die mehreren Lebensmittelprodukte von dem Förderband (70) zu einem Aufbewahrungsbehälter (88) zu bewegen.

7. Grillgerät nach Anspruch 1, das ferner Folgendes umfasst: einen Lebensmittelabstreifer, der dazu konfiguriert ist, jedes des einen oder der mehreren Lebensmittelprodukte von dem Förderband (70) zu trennen, wobei zum Beispiel der Lebensmittelabstreifer jedes des einen oder der mehreren Lebensmittelprodukte in einen Aufbewahrungsbehälter (88) ablenkt, wobei zum Beispiel das Grillgerät ferner Folgendes umfasst: einen Bandreiniger (84), der dazu konfiguriert ist, das Förderband (70) zu reinigen.

8. Grillgerät nach einem vorhergehenden Anspruch, wobei das Bewegen in Bezug auf das Förderband (70) ein Schwenken einer der oberen Plattenanordnung (26) und der unteren Plattenanordnung (24) bezogen auf das Förderband umfasst, wobei zum Beispiel die eine der oberen Plattenanordnung (26) und der unteren Plattenanordnung (24) durch eine gelenkige Verbindung betriebsmäßig verbunden ist, um das genannte Schwenken bezogen auf das Förderband (70) bereitzustellen.

9. Ein Verfahren zum Garen eines Lebensmittelprodukts unter Verwendung des Grillgeräts nach Anspruch 1:
Transportieren, unter Verwendung des Förderbands (70), eines oder mehrerer Lebensmittelprodukte zwischen der oberen Grillplatte (34) und der unteren Grillplatte (32);
Bewegen, unter Verwendung des einen oder der mehreren Aktoren (50), mindestens einer der oberen Grillplatte (34) und der unteren Grillplatte (32) von der Nicht-Garposition zu der Garposition, wenn das eine oder die mehreren Lebensmittelprodukte zwischen der oberen Grillplatte (34) und der unteren Grillplatte (32) sind;
Erhitzen, unter Verwendung der oberen Grillplatte (34), des einen oder der mehreren Lebensmittelprodukte, wenn mindestens eine der oberen Grillplatte (34) und der unteren Grillplatte (32) in der Garposition ist;
Erhitzen, unter Verwendung der unteren Grillplatte (32), des einen oder der mehreren Lebensmittelprodukte, wenn mindestens eine der oberen Grillplatte (34) und der unteren Grillplatte (32) in der Garposition ist; und
Bewegen, unter Verwendung des einen oder der mehreren Aktoren (50), mindestens einer der oberen Grillplatte (34) und der unteren Grillplatte (32) von der Garposition zu der Nicht-Garposition nach einer ausgewählten Zeitdauer.

10. Verfahren nach Anspruch 9, das ferner Folgendes umfasst: Anhalten des Förderbands (70), wenn das eine oder die mehreren Lebensmittelprodukte zwischen der oberen Grillplatte (34) und der unteren Grillplatte (32) sind; Garen des einen oder der mehreren Lebensmittelprodukte für eine ausgewählte Zeitdauer; und Transportieren, unter Verwendung des Förderbands (70), des einen oder der mehreren Lebensmittelprodukte zwischen der oberen Grillplatte (34) und der unteren Grillplatte (32) heraus, nachdem sich mindestens eine der oberen Grillplatte (34) und der unteren Grillplatte (32) von der Garposition zu der Nicht-Garposition bewegt.

11. Verfahren nach Anspruch 9, das ferner Folgendes umfasst: Verstellen, unter Verwendung des einen oder der mehreren Aktoren (50), eines Abstands zwischen der oberen Grillplatte (34) und der unteren Grillplatte (32), wenn mindestens eine der oberen Grillplatte (34) und der unteren Grillplatte (32) in der Garposition ist.

12. Verfahren nach Anspruch 9, das ferner Folgendes umfasst: Formen, unter Verwendung eines Lebensmittelproduktformers (55), des einen oder der mehreren Lebensmittelprodukte; und Platzieren, unter Verwendung des Lebensmittelproduktformers (55), jedes des einen oder der mehreren Lebensmittelprodukte auf das Förderband (70).

13. Verfahren nach Anspruch 9, das ferner Folgendes umfasst: Transferieren jedes des einen oder der mehreren Lebensmittelprodukte von dem Förderband (70) zu einem Aufbewahrungsbehälter (88).

14. Verfahren nach Anspruch 9, das ferner Folgendes umfasst: Trennen, unter Verwendung eines Lebensmittelabstreifers, jedes des einen oder der mehreren Lebensmittelprodukte von dem Förderband (70).

15. Verfahren nach Anspruch 9, das ferner Folgendes umfasst: Ablenken, unter Verwendung des Lebensmittelabstreifers, jedes des einen oder der mehreren Lebensmittelprodukte in einen Aufbewahrungsbehälter (88).

## Revendications

1. Grill comprenant :
un ensemble plateau supérieur (26) comprenant une plaque de grill supérieure (34) ;
un ensemble plateau inférieur (24) comprenant une plaque de grill inférieur (32) opposée à la plaque de grill supérieure (34), la plaque de grill supérieure (34) étant séparée de la plaque de grill inférieure (32) d'une certaine distance ;
un ou plusieurs premiers actionneurs (50) reliés de manière fonctionnelle à l'ensemble plateau supérieur (26) et un ou plusieurs seconds actionneurs reliés de manière fonctionnelle à l'ensemble plateau inférieur (24), le ou les premiers et le ou les seconds actionneurs (50) étant configurés pour régler la distance ; et
une bande transporteuse (70) située entre la plaque de grill supérieure (34) et la plaque de grill inférieure (32), la bande transporteuse (70) étant configurée pour déplacer un ou plusieurs produits alimentaires entre la plaque de grill supérieure (34) et la plaque de grill inférieure (32),
le déplacement de l'ensemble plateau supérieur (26) et de l'ensemble plateau inférieur (24) pour régler la distance entraînant le déplacement de l'ensemble plateau supérieur (26) et de l'ensemble plateau inférieur (24) par rapport à la bande transporteuse (70) entre la plaque de grill supérieure (34) et la plaque de grill inférieure (32),
la plaque de grill supérieure (34) et la plaque de grill inférieure (32) se déplaçant entre une position de cuisson et une position de non-cuisson pour régler la distance, l'ensemble plateau inférieur étant configuré pour être abaissé et relevé pour se déplacer entre la position de cuisson et la position de non-cuisson et, dans la position de non-cuisson, la plaque de grill inférieure étant espacée de la bande transporteuse.

2. Grill selon la revendication 1, comprenant en outre : un dispositif de façonnage de produits alimentaires (55) configuré pour façonner chacun du ou des produits alimentaires et placer chacun du ou des produits alimentaires sur la bande transporteuse (70).

3. Grill selon la revendication 1, dans lequel la bande transporteuse est configurée pour déplacer le ou les produits alimentaires entre la plaque de grill supérieure (34) et la plaque de grill inférieure (32) lorsque au moins un ensemble parmi l'ensemble plateau supérieur (26) et l'ensemble plateau inférieur (24) est dans la position de non-cuisson.

4. Grill selon la revendication 3, dans lequel au moins un ensemble parmi l'ensemble plateau supérieur (26) et l'ensemble plateau inférieur (24) est configuré pour se déplacer de la position de non-cuisson à la position de cuisson lorsque le ou les produits alimentaires se trouvent entre la plaque de grill supérieure (34) et la plaque de grill inférieure (32).

5. Grill selon la revendication 1, dans lequel au moins un ensemble parmi l'ensemble plateau supérieur (26) et l'ensemble plateau inférieur (24) est configuré pour rester dans la position de cuisson pendant une période de temps sélectionnée, par exemple le ou les actionneurs étant configurés pour régler la distance pendant la période de temps sélectionnée, par exemple au moins un ensemble parmi l'ensemble plateau supérieur (26) et l'ensemble plateau inférieur (24) étant configuré pour se déplacer de la position de cuisson à la position de non-cuisson après la période de temps sélectionnée.

6. Grill selon la revendication 1, dans lequel la bande transporteuse (70) est configurée pour déplacer le ou les produits alimentaires de la bande transporteuse (70) à un réceptacle de stockage (88).

7. Grill selon la revendication 1, comprenant en outre : un extracteur d'aliments configuré pour séparer chacun du ou des produits alimentaires de la bande transporteuse (70), par exemple l'extracteur d'aliments déviant chacun du ou des produits alimentaires dans un réceptacle de stockage (88), par exemple le grill comprenant en outre : un nettoyeur de bande (84) configuré pour nettoyer la bande transporteuse (70).

8. Grill selon l'une quelconque des revendications précédentes, dans lequel le déplacement par rapport à la bande transporteuse (70) comprend le pivotement de l'ensemble plateau supérieur (26) ou de l'ensemble plateau inférieur (24) par rapport à la bande transporteuse, par exemple l'ensemble plateau supérieur (26) et l'ensemble plateau inférieur (24) étant reliés de manière fonctionnelle par une liaison articulée pour assurer ledit pivotement par rapport à la bande transporteuse (70).

9. Procédé de cuisson d'un produit alimentaire au moyen du grill selon la revendication 1 :
transporter, au moyen de la bande transporteuse (70), un ou plusieurs produits alimentaires entre la plaque de grill supérieure (34) et la plaque de grill inférieure (32) ;
déplacer, au moyen du ou des actionneurs (50), au moins une plaque parmi la plaque de grill supérieure (34) et la plaque de grill inférieure (32) de la position de non-cuisson à la position de cuisson lorsque le ou les produits alimentaires se trouvent entre la plaque de grill supérieure (34) et la plaque de grill inférieure (32) ;
chauffer, au moyen de la plaque de grill supérieure (34), le ou les produits alimentaires lorsque au moins une plaque parmi la plaque de grill supérieure (34) et la plaque de grill inférieure (32) est dans la position de cuisson ;
chauffer, au moyen de la plaque de grill inférieure (32), le ou les produits alimentaires lorsque au moins une plaque parmi la plaque de grill supérieure (34) et la plaque de grill inférieure (32) est dans la position de cuisson ; et
déplacer, au moyen du ou des actionneurs (50), au moins une plaque parmi la plaque de grill supérieure (34) et la plaque de grill inférieure (32) de la position de cuisson à la position de non-cuisson après une période de temps sélectionnée.

10. Procédé selon la revendication 9, consistant en outre à : arrêter la bande transporteuse (70) lorsque le ou les produits alimentaires se trouvent entre la plaque de grill supérieure (34) et la plaque de grill inférieure (32) ; cuire le ou les produits alimentaires pendant une période de temps sélectionnée ; et transporter, au moyen de la bande transporteuse (70), le ou les produits alimentaires hors d'entre la plaque de grill supérieure (34) et la plaque de grill inférieure (32) après le déplacement d'au moins une plaque parmi la plaque de grill supérieure (34) et la plaque de grill inférieure (32) de la position de cuisson à la position de non-cuisson.

11. Procédé selon la revendication 9, consistant en outre à : régler, au moyen du ou des actionneurs (50), une distance entre la plaque de grill supérieure (34) et la plaque de grill inférieure (32) lorsque au moins une plaque parmi la plaque de grill supérieure (34) et la plaque de grill inférieure (32) est dans la position de cuisson.

12. Procédé selon la revendication 9, consistant en outre : façonner, au moyen d'un dispositif de façonnage de produits alimentaires (55), chacun du ou des produits alimentaires ; et placer, au moyen du dispositif de façonnage de produits alimentaires (55), chacun du ou des produits alimentaires sur la bande transporteuse (70).

13. Procédé selon la revendication 9, consistant en outre à : transférer chacun du ou des produits alimentaires de la bande transporteuse (70) à un réceptacle de stockage (88).

14. Procédé selon la revendication 9, consistant en outre à : séparer, au moyen d'un extracteur d'aliments, chacun du ou des produits alimentaires de la bande transporteuse (70).

15. Procédé selon la revendication 9, consistant en outre à : dévier, au moyen de l'extracteur d'aliments, chacun du ou des produits alimentaires dans un réceptacle de stockage (88).
